# EUROPÄISCHE PATENTSCHRIFT

(11) **EP 3 406 129 B1**
(45) Veröffentlichungstag und Bekanntmachung des Hinweises auf die Patenterteilung: **03.11.2021**
(21) Anmeldenummer: 18160399.4
(22) Anmeldetag: 07.03.2018
(51) Int. Cl.: A01D 41/14, A01D 57/20, B65G 23/44

(54) **SCHNEIDWERK**
CUTTING TOOL
MÉCANISME DE COUPE

(30) Priorität: 22.05.2017 DE 102017111060
(43) Veröffentlichungstag der Anmeldung: 28.11.2018
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Hinz, Thomas, 33428 Harsewinkel (DE); Köhler, Mathieu, 33428 Harsewinkel (DE)
(74) Vertreter: CLAAS Gruppe

(56) Entgegenhaltungen:
- EP-B1- 2 586 288
- WO-A1-2011/108984
- US-A- 3 921 793
- US-A- 6 161 683
- US-B1- 6 202 397

## Beschreibung

Die vorliegende Erfindung betrifft ein Schneidwerk gemäß dem Oberbegriff des Anspruchs 1.

Ein solches Schneidwerk ist aus US 6 202 397 B1 bekannt.

Schneidwerke der eingangs genannten Art sind als sogenannte Bandschneidwerke ausgeführt, welche einen an einem Grundrahmen angeordneten Mittenabschnitt und wenigstens zwei benachbart zu dem Mittenabschnitt angeordnete Seitenabschnitte umfassen. Ein sich im Wesentlichen über die Breite des Schneidwerks erstreckender Messerbalken schneidet Erntegut, welches mittels einer Fördervorrichtung, die von dem Messerbalken abgeschnittenes Erntegut seitwärts in Richtung des Mittenabschnittes transportiert wird. Der Mittenabschnitt weist wenigstens ein quer zur Transportrichtung der Fördervorrichtung endlos umlaufendes, unterbrechungsfreies Förderband auf, welches um zwei zueinander beabstandet angeordnete Rollen geführt ist. Die Rollen sind zwischen sich in Transportrichtung des Förderbandes parallel zueinander erstreckenden Trägerelementen angeordnet und jeweils an den Trägerelementen vorgesehenen Lagerstellen gelagert.

Derartige Schneidwerke zeichnen sich durch ein hohes Maß an Flexibilität bei der Anpassung an eine Bodenkontur einer zu bearbeitenden Fläche aus. Das Förderband des Mittenabschnittes, welches um die Rollen geführt ist, wird durch einen Verbinder zu einem endlos umlauffähigen Förderband verbunden. Der Verbinder besteht aus zwei Vierkantrohren, die mittels Schrauben die beiden Bandenden zusammenklemmen. Nachteilig an dieser Verbindungsstelle ist, dass das Förderband in Umlaufrichtung über einen großen Bereich hinweg versteift wird. Hierdurch wird der Bandlauf unruhig, sobald dieser Bereich die jeweilige Rolle passiert. Um einen ruhigeren Bandlauf zu erzielen, wird der Durchmesser der Rollen größer gewählt. Dies ist jedoch von Nachteil, wenn für eine möglichst kompakte Bauweise des Mittenabschnittes zwischen der Rolle und dem Messerbalken ein möglichst geringer Abstand erreicht werden soll. Ein geringer Abstand der Rolle zum Messerbalken unterstützt den Gutfluss, speziell bei der Ernte von niedrigen Beständen mit wenig Ertrag.

Darüber hinaus hat die Verbindungsstelle mit den beiden Vierkantrohren noch einen weiteren Nachteil. Sie unterbricht das Förderband und bildet eine Bruchstelle, die zur Ermüdung neigt und das oftmals bevor die Lebensdauer des Förderbandes erreicht wird. Das Vorhandensein der Verbindungsstelle ist der konstruktiven Gestaltung des Mittenabschnittes geschuldet, der einen Einbau eines Förderbandes ohne Verbindungsstelle nicht erlaubt. Dies gilt in gleicher Weise für die Demontage sowie den späteren Service des Förderbandes zu Wartungs- und Reinigungszwecken. Häufig ist das Erreichen des Inneren des Förderbandes nur dann möglich, wenn man die Verbindungsstelle auftrennt, um Wartung- oder Reinigungsarbeiten durchführen zu können.

Aus der EP 2 586 288 B1 ist ein Schneidwerk der eingangs genannten Art bekannt, welches Seitenabschnitte und einen Mittenabschnitt umfasst. Der Mittenabschnitt weist einen Mittenförderer auf, der ein endlos umlaufendes, unterbrechungsfreies Förderband umfasst, welches um zwei zueinander beabstandete Rollen geführt ist, welche an zwei sich parallel zur Transportrichtung des Förderbandes erstreckenden Trägerelementen angeordnet und jeweils an den Trägerelementen vorgesehenen Lagerstellen gelagert sind. Zwischen dem Förderband ist ein Bandspanner angeordnet, mit dem die beiden Rollen mit einer einander entgegen gerichteten Druckkraft beaufschlagt werden. Zur Montage und Demontage ist vorgesehen, dass der Mittenförderer auf einer Seite an einem Trägerelement um eine horizontale Achse schwenkbar angelenkt ist, und auf der anderen Seite an dem anderen Trägerelement lösbar angeordnet ist, so dass der Mittenförderer abschnittsweise nach unten wegschwenkbar ist. Der Schwenkweg ist derart bemessen, dass sich in dieser Position des Mittenförderers das endlose Förderband in einer parallel zu den Rollen verlaufenden Richtung von diesen abziehen lässt. Als nachteilig erweist sich an dieser Ausgestaltung des Mittenförderers, dass die Zugänglichkeit insbesondere im inneren Bereich des Förderbandes sowie im Bereich des Trägerelementes, an dem der Mittenförderer schwenkbar angelenkt ist, sehr eingeschränkt ist. Um auch die Bereiche des Trägerelementes für Reinigungszwecke erreichen zu können, an denen der Mittenförderer schwenkbar angelenkt ist, muss das Förderband abgezogen und anschließend wieder aufgeschoben werden, was zeitaufwendig ist.

Somit ist es die Aufgabe der vorliegenden Erfindung, ein Schneidwerk der eingangs genannten Art weiterzubilden, welches sich durch eine bessere Wartbarkeit und Montagefreundlichkeit auszeichnet.

Diese Aufgabe wird erfindungsgemäß durch ein Schneidwerk gemäß den Merkmalen des Anspruchs 1 gelöst.

Vorteilhafte Weiterbildungen sind Gegenstand der Unteransprüche.

Gemäß dem Anspruch 1 wird ein Schneidwerk vorgeschlagen, umfassend einen an einem Grundrahmen angeordneten Mittenabschnitt und wenigstens zwei benachbart zu dem Mittenabschnitt angeordnete Seitenabschnitte, einen sich im Wesentlichen über die Breite des Schneidwerkes erstreckenden Messerbalken sowie zumindest eine Fördervorrichtung, welche von dem Messerbalken abgeschnittenes Erntegut seitwärts in Richtung des Mittenabschnittes transportiert, welcher einen Mittenförderer aufweist, der ein endlos umlaufendes, unterbrechungsfreies Förderband umfasst, welches um zwei zueinander beabstandete Rollen geführt ist, welche an zwei sich parallel zur Transportrichtung des Förderbandes erstreckenden Trägerelementen angeordnet und jeweils an den Trägerelementen vorgesehenen Lagerstellen gelagert sind, wobei die Trägerelemente jeweils eine sich in Längsrichtung des Trägerelementes erstreckende Führungsausnehmung aufweisen, in welchen eine der Rollen in Längsrichtung der Trägerelemente abschnittsweise verschiebbar ist, so dass das Förderband aus einer Betriebsposition, in der das Förderband gespannt ist, in eine Wartungsposition überführbar ist, in der das Förderband in vertikaler Richtung abschnittsweise durchhängt. Die Führungsausnehmungen sind einander gegenüberliegend an einem Ende der Trägerelemente angeordnet. Durch die Möglichkeit, eine der Rollen auf die andere zu zu bewegen, lässt sich das Band in eine Wartungsposition überführen. Dies ermöglicht eine einfache Zugänglichkeit des Bereiches zwischen dem Förderband und den zu den Rollen benachbarten Bereichen, um notwendige Wartungs- und Reinigungsarbeiten durchführen zu können. Im Gegensatz zum Stand der Technik ist eine Demontage und Montage des Förderbandes zu Reinigungszwecken nicht erforderlich.

Damit kann das Förderband in seiner Wartungsposition abschnittsweise durch eine auf der Unterseite des Schneidwerks freigebbare Öffnung hinausragen. Hierdurch ist das insbesondere Bandinnere in kurzer Zeit zu Reinigungszwecken erreichbar. Die Dauer etwaiger Unterbrechungen während eines Erntevorganges kann somit deutlich reduziert werden.

Vorteilhaft ist es, wenn an dem Mittenabschnitt auf der Unterseite des Schneidwerkes zumindest eine Wartungsklappe angelenkt ist, welche um eine parallel zu den Rollen verlaufende Achse schwenkbar ist.

Dabei sollte die zumindest eine Wartungsklappe eine Breite aufweisen, die größer als der Abstand der beiden Trägerelemente zueinander ist. Hierdurch ist eine ausreichende Zugänglichkeit zu Wartungs- und Reinigungszwecken gewährleistet. Insbesondere kann die zumindest eine Wartungsklappe benachbart zum Messerbalken angelenkt sein. Die zumindest eine Wartungsklappe kann somit in Richtung des Messerbalkens ausschwenken. Für die Arretierung der zumindest einen Wartungsklappe erforderliche Arretiermittel sind bevorzugt im hinteren Bereich des Schneidwerks angeordnet, wo mehr Bauraum zur Verfügung steht.

Gemäß einer Weiterbildung kann vorgesehen sein, dass die Lagerstellen als lösbar an den beiden Trägerelementen angeordnete Lagereinheiten ausgeführt sind, so dass das Förderband und die Rollen in von den Trägerelementen gelöster Position der Lagereinheiten von der Unterseite des Schneidwerks her gemeinsam entnehmbar sind. Hierdurch wird ein schneller und unkomplizierter Austausch des Förderbandes ermöglicht. Aufgrund der gewählten Mindestbreite der Wartungsklappe lassen sich die jeweiligen Lagereinheiten seitlich von den Rollen entfernen.

Vorteilhaft ist es, wenn die verschiebbare Rolle mittels einer beidseitig an den Lagerstellen angeordneten Spannvorrichtung aus der Betriebsposition in die Wartungsposition überführbar ist und umgekehrt. Den Spannvorrichtungen kommen somit zwei Aufgaben zu. Zum einen dienen die Spannvorrichtungen dazu, die notwendige Bandspannung zu erzeugen und aufrechtzuerhalten. Zum anderen bilden die Spannvorrichtungen jeweils ein Betätigungselement, um die verschiebbare Rolle von der Betriebsposition in die Wartungsposition zu überführen und umgekehrt.

Hierzu kann die jeweilige Spannvorrichtung als eine Kniehebelanordnung ausgeführt sein, die außenseitig an dem jeweiligen Trägerelement lösbar angeordnet ist. Die Kniehebelanordnung ist aufgrund ihrer außenseitigen Anordnung sowie der Mindestbreite der Wartungsklappe einfach zugänglich. Wegen der im Gegensatz zum Stand der Technik außenseitigen Anordnung der Spannvorrichtungen ist das Innere des Förderbandes barrierefrei zugänglich.

Insbesondere kann die jeweilige Spannvorrichtung eine in Längsrichtung des Trägerelementes verschiebbare Schiebeeinheit aufweisen, an denen die jeweilige Lagereinheit der mittels der Spannvorrichtung verschiebbaren Rolle befestigt ist. Somit lässt sich bei einem Austausch des Förderbandes der Aufwand reduzieren, indem die Lagereinheiten der verschiebbaren Rolle gemeinsam mit den Schiebeeinheiten der Spannvorrichtung ab- und angebaut werden können. Die Lagereinheiten der ortsfest angeordneten Rolle sind jeweils mittels eines Befestigungsabschnittes an den Trägerelementen angeordnet. Als lösbare Verbindung zur Befestigung der Schiebeeinheiten sowie der Befestigungsabschnitte können Schraubverbindungen vorgesehen sein.

Bevorzugt kann die zum Messerbalken benachbart angeordnete Rolle einen kleineren Außendurchmesser aufweisen als die weiter zum Messerbalken beabstandete Rolle. Die Bauhöhe des Mittenförderers lässt sich hierdurch in dem für die Gutannahme sensiblen Bereich hinter dem Messerbalkens minimieren, was Gutablagerungen vorbeugt. Zudem lässt sich der Abstand zwischen dem Messerbalken und dem Förderband des Mittenförderers reduzieren, wodurch die Gutannahme in diesem Bereich verbessert wird.

Weiterhin kann die zum Messerbalken benachbart angeordnete Rolle als Umlenkrolle und die weiter zum Messerbalken beabstandet angeordnete Rolle als Antriebsrolle ausgebildet sein.

Die vorliegende Erfindung wird nachstehend anhand eines in den Zeichnungen dargestellten Ausführungsbeispieles näher erläutert.

Es zeigen:
- Fig. 1: eine schematische Teildarstellung eines Schneidwerks in perspektivischer Ansicht;
- Fig. 2: eine perspektivische Ansicht eines Mittenabschnitts in schematischer Darstellung;
- Fig. 3: eine Teilansicht eines Trägerelementes des Mittenabschnitts gemäß Fig. 2;
- Fig. 4: eine Teilansicht des Mittenabschnitts in einer Ansicht von oben;
- Fig. 5: eine schematische Seitenansicht des Mittenabschnitts.

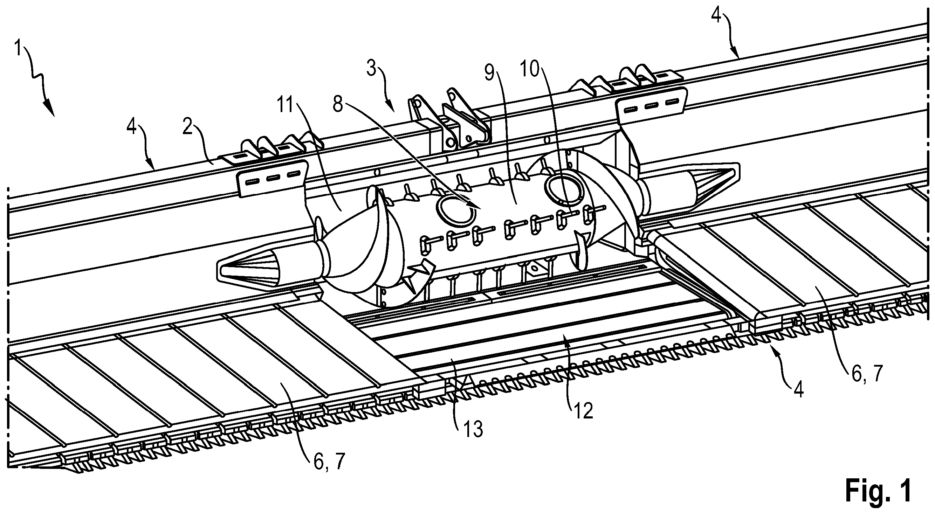

In Fig. 1 ist eine schematische Teildarstellung eines Schneidwerks 1 in perspektivischer Ansicht gezeigt. Das Schneidwerk 1 ist als ein so genanntes Bandschneidwerk ausgeführt, welches sich durch ein hohes Maß an Flexibilität bei der Anpassung an eine Bodenkontur einer zu bearbeitenden respektive abzuerntenden Fläche aufweist. Das Schneidwerk 1 weist einen Grundrahmen 2 auf, an welchem ein Mittenabschnitt 3 und zumindest zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite ein Messerbalken 5 angeordnet, der sich im Wesentlichen über die gesamte Breite des Schneidwerkes 1 erstreckt. Weiterhin sind an dem Grundrahmen 2 des Schneidwerkes 1 nicht dargestellte Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 5.

Das von dem Messerbalken 5 abgetrennte Erntegut wird einer hinter dem Messerbalken 5 angeordneten Fördervorrichtung 6 zugeführt, die auf den jeweiligen Seitenabschnitten 4 zumindest ein endlos umlaufendes Seitenförderband 7 umfasst. Die endlos umlaufenden Seitenförderbänder 7 sind benachbart zu dem Mittenabschnitt 3 angeordnet, um das von dem Messerbalken 5 abgeschnittene Erntegut parallel zu der Längsachse des Schneidwerkes 1 in Richtung des Mittenabschnittes 3 zu transportieren. Im Bereich des Mittenabschnittes 3 wird das Erntegut einer Einzugsvorrichtung 8 zugeführt. Die Einzugsvorrichtung 8 ist als eine antreibbare Einzugswalze 9, die durch Rahmenelemente an dem Grundrahmen 2 gelagert ist, ausgeführt. Die Einzugswalze 9 weist einziehbare Finger 10 auf. Die Einzugsvorrichtung 8 führt das von den endlosen Seitenförderbändern 7 dem Mittenabschnitt 3 seitlich zugeführte Erntegut einer in dem Grundrahmen 2 vorgesehenen, hinter der Einzugswalze 9 befindlichen, Öffnung 11 zu, durch welche das abgeschnittene Erntegut durch einen nicht dargestellten Einzugskanal eines Mähdreschers, an dem das Schneidwerk 1 befestigbar ist, dem Mähdrescher zur weiteren Verarbeitung übergeben wird. Der Mittenabschnitt 3 weist einen Mittenförderer 12 auf, welcher zumindest ein endlos umlaufendes Förderband 13 umfasst.

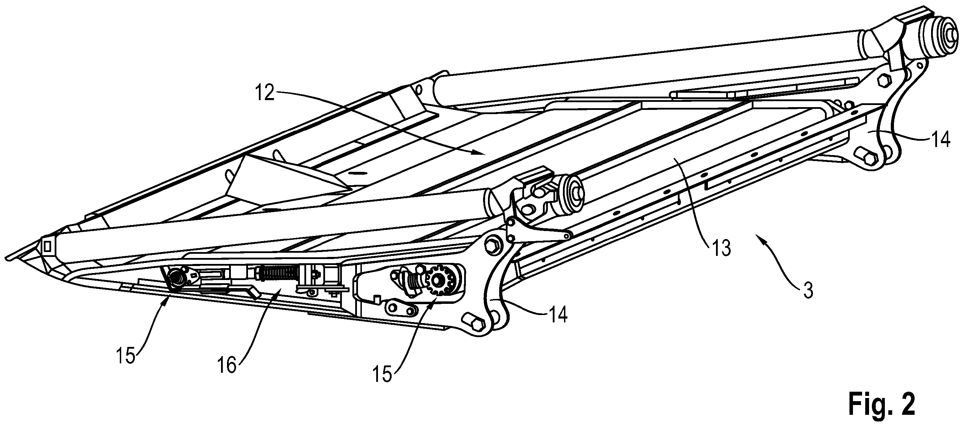

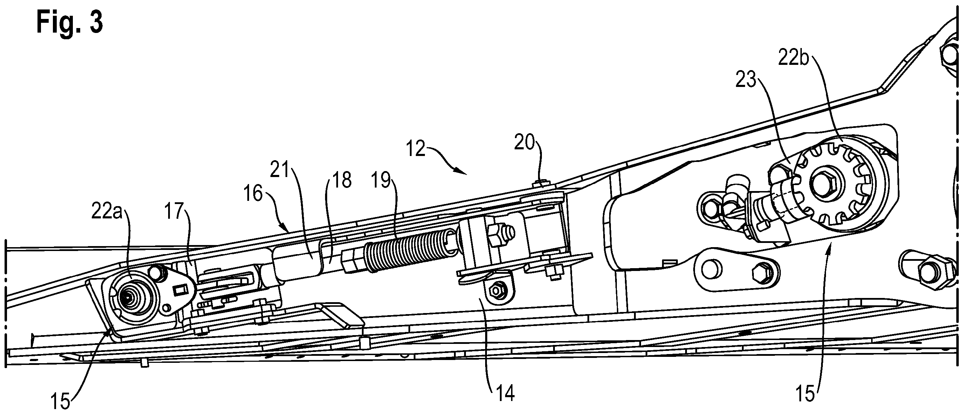

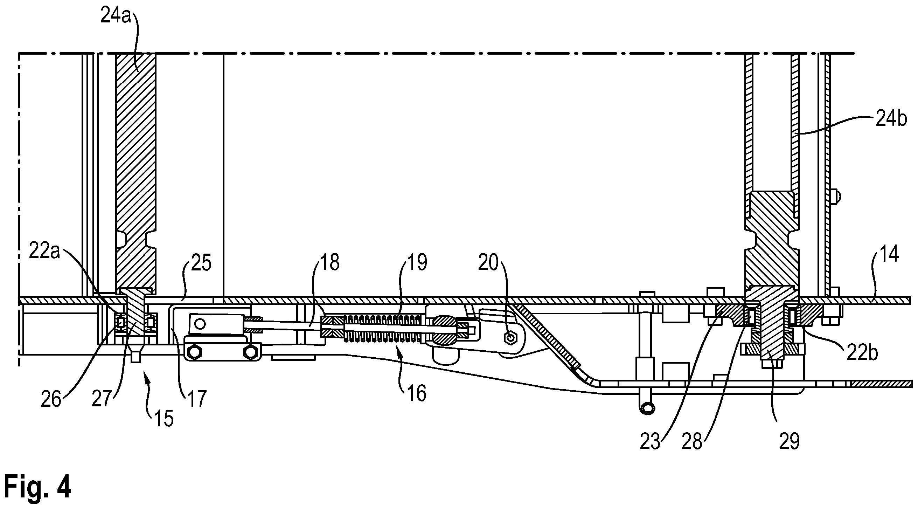

Fig. 2 zeigt eine perspektivische Ansicht eines Mittenabschnitts 3 in schematischer Darstellung. Das Förderband 13 ist unterbrechungsfrei ausgeführt, d. h. es weist keine Verbindungsstelle zur lösbaren Verbindung zweier Enden des Förderbandes auf. Der Mittenförderer 12 ist an sich parallel zur Förderleistung des Förderbandes 13 erstreckenden Trägerelementen 14 angeordnet. Hierzu sind endseitig des jeweiligen Trägerelementes 14 Lagerstellen 15 vorgesehen, welche der Lagerung einer als Antriebsrolle ausgebildeten Rolle 24b sowie einer als Umlenkrolle ausgebildeten Rolle 24a, wie in Figur 4 dargestellt, dienen. Die Rollen 24, 24b sind zwischen den Trägerelementen 14 angeordnet, Um diese Rollen 24a, 24b läuft das Förderband 13 des Mittenförderers 12 endlos um. Weiterhin zeigt die Darstellung in Fig. 2 eine von zwei Spannvorrichtungen 16, welche jeweils außenseitig, das heißt auf den dem Förderband 13 abgewandten Seiten, an den Trägerelementen 14 angeordnet sind. Die Spannvorrichtung 16 ist jeweils als eine Kniehebelanordnung ausgeführt, die nachfolgend anhand der Fig. 3 näher beschrieben wird.

In Fig. 3 ist eine Teilansicht eines der Trägerelemente 14 des Mittenabschnitts 3 gemäß der Fig. 2 dargestellt. Die Trägerelemente 14 des Mittenabschnitts 3 sind spiegelbildlich aufgebaut. Alle nachfolgend beschriebenen Komponenten des in Figur 3 dargestellten Trägerelementes 14 finden sich auch an dem nicht dargestellten Trägerelement des Mittenabschnitts 3. Die Spannvorrichtung 16 umfasst eine Schiebeeinheit 17, eine daran angelenkte Koppelstange 18, auf der eine Druckfeder 19 angeordnet ist, sowie einen um einem Drehpunkt 20 schwenkbar angeordneten Kniehebel 21. An der Schiebeeinheit 17 ist eine vordere Lagereinheit 22a angeordnet, welche der drehbaren Lagerung der als Umlenkrolle ausgebildeten Rolle 24a dient. Die vordere Lagereinheit 22a ist gemeinsam mit der Schiebeeinheit 17 in Längsrichtung des Trägerelementes 14 verschiebbar. Am gegenüberliegenden Ende des Trägerelementes 14 ist eine hintere Lagereinheit 22b vorgesehen, welche mittels eines flanschförmigen Befestigungsabschnittes 23 an dem Trägerelement 14 lösbar befestigt ist. Die hintere Lagereinheit 22b dient der drehbaren Lagerung der als Antriebsrolle ausgebildeten Rolle 24b.

Fig. 4 zeigt eine Teilansicht des Mittenabschnitts 3 in einer Ansicht von oben. Dabei wurde zur besseren Veranschaulichung auf die Darstellung des Förderbandes 13 verzichtet. Die in der Schiebeeinheit 17 angeordnete vordere Lagereinheit 22a weist ein Wälzlager 20 auf, in welchem ein Wellensegment 27 drehbar gelagert ist. Das Wellensegment 27 ist mit der Rolle 24a lösbar verbunden. Das Wellensegment 27 erstreckt sich durch eine Führungsausnehmung 25 im Trägerelement 14. Die Führungsausnehmung 25 erstreckt sich abschnittsweise in Längsrichtung des Trägerelementes 14. Die hintere Lagereinheit 22b weist ebenfalls ein Wälzlager 28 und ein darin drehbar gelagertes Wellensegment 29 auf. Das Wellensegment 29 ist lösbar mit der Rolle 24b verbunden.

Die hinteren Lagereinheiten 22b sind mitsamt dem Befestigungsabschnitt 23 von dem jeweiligen Trägerelement 14 lösbar. Zum Lösen der vorderen Lagereinheiten 22a ist vorgesehen, dass die jeweilige Spannvorrichtung 16 zusammen mit der daran angeordneten Lagereinheit 22a von dem jeweiligen Trägerelement 14 gelöst wird. Bevorzugt sind die Befestigungsabschnitte 23 bzw. die Spannvorrichtungen 16 mittels Schraubverbindungen mit den Trägerelementen 14 verbunden.

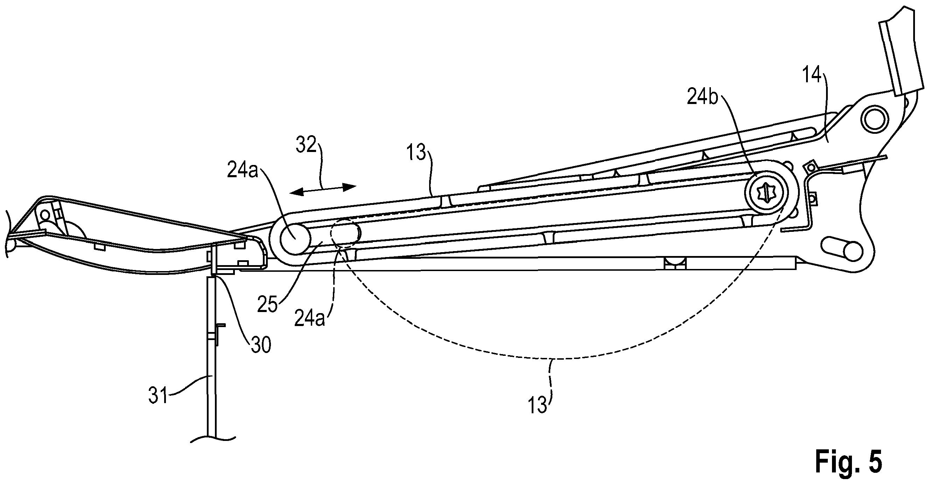

Die Darstellung in Fig. 5 zeigt eine schematische Seitenansicht des Mittenabschnitts 3. Der Mittenabschnitt 3 weist an seiner Unterseite eine um eine Achse 30 schwenkbar angeordnete Wartungsklappe 31 auf. Die Achse 30 ist bevorzugt auf der dem Messerbalken 5 zugewandten Seite des Mittenabschnitts 3 angeordnet. Die Wartungsklappe 31 ist mittels einer nicht näher dargestellten Arretierung in geschlossener Position verriegelbar, sodass sich die Wartungsklappe 31 sich im Wesentlichen parallel zu Unterseite des Mittenabschnitts 3 erstreckt. Die Breite der Wartungsklappe 31 entspricht zumindest dem Abstand der beiden Trägerelemente 14 zueinander.

Die Darstellung in Figur 5 zeigt die Wartungsklappe 31 in geöffneter Position. In geöffneter Position der Wartungsklappe 31 ist der Mittenabschnitt 3 von unten her zugänglich. Wie weiter oben bereits beschrieben wurde, ist die Rolle 24a in Längsrichtung des Trägerelementes 14 innerhalb der Führungsausnehmung 25 verschiebbar. Ein Pfeil 32 kennzeichnet die Bewegungsrichtung der Rolle 24a. Das Förderband 13 ist in seiner gespannten Betriebsposition sowie, strichliniert, in seiner Wartungsposition, in der das Förderband 13 abschnittsweise in vertikaler Richtung durchhängt, dargestellt. Um das Förderband 13 in die Wartungsposition zu überführen, wird mittels der beidseitig an den Trägerelementen 14 angeordneten Spannvorrichtungen 16 die Rolle 24a abschnittsweise in Richtung der Rolle 24b verschoben. Die Betätigung des Kniehebels 20 zum Lösen der Spannung des Förderbandes 13 überführt die Schiebeeinheit 17 in Richtung des Pfeils 32 in eine zum Messerbalken 5 weiter beabstandete Position. Hierbei werden die Rolle 24a gemeinsam mit den Lagereinheiten 22a von der Schiebeeinheit 17 innerhalb der Führungsausnehmungen 25 geführt. Die Länge der Führungsausnehmungen 25 ist derart bemessen, dass das Förderband 13 nicht lediglich entspannt wird, sondern bei geöffneter Wartungsklappe 31 deutlich über die Unterseite des Mittenabschnitts 3 hinausragt.

Die Spannvorrichtungen 16 bzw. die Lagereinheiten 22b lassen sich bei geöffneter Position der Wartungsklappe 31 seitlich entnehmen. Das Lösen der vorderen und hinteren Lagereinheiten 22a und 22b ermöglicht es, das Förderband 13 zusammen mit den Rollen 24a und 24b durch die von der Wartungsklappe 31 freigegebene Öffnung auf der Unterseite des Mittenabschnitts 3 zu entnehmen.

### Bezugszeichenliste

| | | | |
|---|---|---|---|
| 1 | Schneidwerk | 28 29 | Wälzlager Wellensegment |
| 2 | Grundrahmen | 30 | Achse |
| 3 | Mittenabschnitt | 31 | Wartungsklappe |
| 4 | Seitenabschnitt | 32 | Pfeil |
| 5 | Messerbalken | | |
| 6 | Fördervorrichtung | | |
| 7 | Seitenförderband | | |
| 8 | Einzugsvorrichtung | | |
| 9 | Einzugswalze | | |
| 10 | Finger | | |
| 11 | Öffnung | | |
| 12 | Mittenförderer | | |
| 13 | Förderband | | |
| 14 | Trägerelement | | |
| 15 | Lagerstelle | | |
| 16 | Spannvorrichtung | | |
| 17 | Schiebereinheit | | |
| 18 | Koppelstange | | |
| 19 | Druckfeder | | |
| 20 | Drehpunkt | | |
| 21 | Kniehebel | | |
| 22a | Vordere Lagereinheit | | |
| 22b | Hintere Lagereinheit | | |
| 23 | Befestigungsabschnitt | | |
| 24a | Rolle | | |
| 24b | Rolle | | |
| 25 | Führungsausnehmung | | |
| 26 | Wälzlager | | |
| 27 | Wellensegment | | |

## Patentansprüche

1. Schneidwerk (1), umfassend einen an einem Grundrahmen (2) angeordneten Mittenabschnitt (3) und wenigstens zwei benachbart zu dem Mittenabschnitt (3) angeordnete Seitenabschnitte (4), einen sich im Wesentlichen über die Breite des Schneidwerkes (1) erstreckenden Messerbalken (5) sowie zumindest eine Fördervorrichtung (6), welche von dem Messerbalken (5) abgeschnittenes Erntegut seitwärts in Richtung des Mittenabschnittes (3) transportiert, welcher einen Mittenförderer (12) aufweist, der ein endlos umlaufendes, unterbrechungsfreies Förderband (13) umfasst, welches um zwei zueinander beabstandete Rollen (24a, 24b) geführt ist, welche an zwei sich parallel zur Transportrichtung des Förderbandes (13) erstreckenden Trägerelementen (14) angeordnet und jeweils an den Trägerelementen (14) vorgesehenen Lagerstellen (15) gelagert sind und die Trägerelemente (14) jeweils eine sich in Längsrichtung des Trägerelementes (14) erstreckende Führungsausnehmung (25) aufweisen, in welchen eine der Rollen (24a) in Längsrichtung der Trägerelemente (14) abschnittsweise verschiebbar ist, **dadurch gekennzeichnet, dass** das Förderband (13) aus einer Betriebsposition, in der das Förderband (13) gespannt ist, in eine Wartungsposition überführbar ist, in der das Förderband (13) in vertikaler Richtung abschnittsweise durchhängt und das Förderband (13) in seiner Wartungsposition abschnittsweise durch eine auf der Unterseite des Schneidwerks (1) freigebbare Öffnung hinausragt.

2. Schneidwerk (1) nach Anspruch 1, **dadurch gekennzeichnet, dass** an dem Mittenabschnitt (3) auf der Unterseite des Schneidwerkes (1) zumindest eine Wartungsklappe (31) angelenkt ist, welche um eine parallel zu den Rollen (24a, 24b) verlaufende Achse (30) schwenkbar ist.

3. Schneidwerk (1) nach Anspruch 2, **dadurch gekennzeichnet, dass** die zumindest eine Wartungsklappe (31) eine Breite aufweist, die größer als der Abstand der beiden Trägerelemente (14) zueinander ist.

4. Schneidwerk (1) nach Anspruch 2 oder 3, **dadurch gekennzeichnet, dass** die zumindest eine Wartungsklappe (31) benachbart zum Messerbalken (5) angelenkt ist.

5. Schneidwerk (1) nach einem der vorangehenden Ansprüche, **dadurch gekennzeichnet, dass** die Lagerstellen (15) als lösbar an zwei Trägerelementen (14) angeordnete Lagereinheiten (22a, 22b) ausgeführt sind, so dass das Förderband (13) und die Rollen (24a, 24b) in von den Trägerelementen (14) gelöster Position der Lagereinheiten (22a, 22b) von der Unterseite des Schneidwerks (1) her gemeinsam entnehmbar sind.

6. Schneidwerk (1) nach einem der vorangehenden Ansprüche, **dadurch gekennzeichnet, dass** die verschiebbare Rolle (24a) mittels einer beidseitig an den Lagerstellen (15) angeordneten Spannvorrichtung (16) aus der Betriebsposition in die Wartungsposition überführbar ist und umgekehrt.

7. Schneidwerk (1) nach Anspruch 6, **dadurch gekennzeichnet, dass** die jeweilige Spannvorrichtung (16) als eine Kniehebelanordnung ausgeführt ist, die außenseitig an dem jeweiligen Trägerelement (14) lösbar angeordnet ist.

8. Schneidwerk () nach Anspruch 7, **dadurch gekennzeichnet, dass** die jeweilige Spannvorrichtung (16) eine in Längsrichtung des Trägerelementes (14) verschiebbare Schiebeeinheit (17) aufweist, an denen die jeweilige Lagereinheit (22a) der mittels der Spannvorrichtung (16) verschiebbaren Rolle (24a) befestigt ist.

9. Schneidwerk (1) nach einem der vorangehenden Ansprüche, **dadurch gekennzeichnet, dass** die zum Messerbalken (5) benachbart angeordnete Rolle (24a) einen kleineren Außendurchmesser aufweist als die weiter zum Messerbalken (5) beabstandete Rolle (24b).

10. Schneidwerk (1) nach einem der vorangehenden Ansprüche, **dadurch gekennzeichnet, dass** die zum Messerbalken (5) benachbart angeordnete Rolle (24a) als Umlenkrolle und die weiter zum Messerbalken (5) beabstandete Rolle (24b) als Antriebsrolle ausgebildet ist.

## Claims

1. A cutting assembly (1) comprising a central section (3) disposed on a main frame (2) and at least two side sections (4) disposed adjacent to the central section (3), a cutter bar (5) extending substantially across the width of the cutting assembly (1), as well as at least one conveying device (6) which transports harvested material cut by the cutter bar (5) laterally in the direction of the central section (3) and which has a central conveyor (12) comprising a continuously revolving, uninterrupted conveyor belt (13) which is guided around two rollers (24a, 24b) which are spaced apart from each other and which are disposed on two support elements (14) which extend parallel to the transport direction of the conveyor belt (13) and are mounted on bearings (15) provided on each of the support elements (14), and the support elements (14) each comprise a guide recess (25) extending in a longitudinal direction of the support element (14), in sections of which one of the rollers (24a) can be displaced in the longitudinal direction of the support element (14), **characterized in that** the conveyor belt (13) can be transposed from an operating position, in which the conveyor belt (13) is tensioned, into a maintenance position, in which sections of the conveyor belt (13) are slack in a vertical direction, and **in that** in its maintenance position, sections of the conveyor belt (13) protrude through an exposable opening on the underside of the cutting assembly (1).

2. The cutting assembly (1) according to claim 1, **characterized in that** at least one maintenance flap (31) is articulated on the central section (3) on the underside of the cutting assembly (1) and is pivotable about an axis (30) extending parallel to the rollers (24a, 24b).

3. The cutting assembly (1) according to claim 2, **characterized in that** the width of the at least one maintenance flap (31) is greater than the distance between the two support elements (14).

4. The cutting assembly (1) according to claim 2 or claim 3, **characterized in that** the at least one maintenance flap (31) is articulated adjacent to the cutter bar (5).

5. The cutting assembly (1) according to one of the preceding claims, **characterized in that** the bearings (15) are configured as bearing units (22a, 22b) which are releasably disposed on two support elements (14) so that when the bearing units (22a, 22b) are in the position which is released from the support elements (14), the conveyor belt (13) and the rollers (24a, 24b) can be removed together from the underside of the cutting assembly (1).

6. The cutting assembly (1) according to one of the preceding claims, **characterized in that** by means of a tensioning device (16) disposed on both sides at the bearings (15) the displaceable roller (24a) can be transposed from the operating position into the maintenance position, and vice versa.

7. The cutting assembly (1) according to claim 6, **characterized in that** the respective tensioning device (16) is configured as a toggle joint assembly which is releasably disposed on the outside of the respective support element (14).

8. The cutting assembly (1) according to claim 7, **characterized in that** the respective tensioning device (16) is provided with a sliding unit (17) which is displaceable in the longitudinal direction of the support element (14) and on which the respective bearing unit (22a) of the roller (24a) which can be displaced by means of the tensioning device (16) is secured.

9. The cutting assembly (1) according to one of the preceding claims, **characterized in that** the roller (24a) disposed adjacent to the cutter bar (5) has a smaller external diameter than the roller (24b) positioned further away from the cutter bar (5).

10. The cutting assembly (1) according to one of the preceding claims, **characterized in that** the roller (24a) disposed adjacent to the cutter bar (5) is configured as a guide roller and the roller positioned further away from the cutter bar (5) is configured as a drive roller.

## Revendications

1. Tablier de coupe (1) incluant une portion centrale (3) disposée sur un bâti (2) et au moins deux portions latérales (4) disposées au voisinage de la portion centrale (3), un lamier (5) s'étendant sensiblement sur la largeur du tablier de coupe (1) ainsi qu'au moins un dispositif d'amenée (6) qui transporte du produit récolté coupé par le lamier (5) latéralement en direction de la portion centrale (3), laquelle comporte un convoyeur central (12) qui inclut une bande de convoyage à défilement continu, ininterrompue (13) qui est guidée sur deux rouleaux distants l'un de l'autre (24a, 24b) qui sont disposés sur deux éléments porteurs (14) s'étendant parallèlement à la direction de transport de la bande de convoyage (13) et qui sont montés respectivement sur des points d'appui (15) prévus sur les éléments porteurs (14), et les éléments porteurs (14) comportant respectivement un évidement de guidage (25) qui s'étend dans la direction longitudinale de l'élément porteur (14) et dans lequel un des rouleaux (24a) est mobile par portions dans la direction longitudinale des éléments porteurs (14), **caractérisé en ce que** la bande de convoyage (13) est transférable d'une position de fonctionnement, dans laquelle la bande de convoyage (13) est tendue, vers une position d'entretien, dans laquelle la bande de convoyage (13) est lâche par portions dans la direction verticale, et, dans sa position d'entretien, la bande de convoyage (13) dépasse par portions par une ouverture libérable sur le dessous du tablier de coupe (1).

2. Tablier de coupe (1) selon la revendication 1, **caractérisé en ce que** sur la portion centrale (3) est articulé, sur le dessous du tablier de coupe (1), au moins un volet d'entretien (31) qui est pivotant autour d'un axe (30) s'étendant parallèlement aux rouleaux (24a, 24b).

3. Tablier de coupe (1) selon la revendication 2, **caractérisé en ce que** le au moins un volet d'entretien (31) présente une largeur qui est supérieure à l'écartement des deux éléments porteurs (14) l'un par rapport à l'autre.

4. Tablier de coupe (1) selon la revendication 2 ou 3, **caractérisé en ce que** le au moins un volet d'entretien (31) est articulé au voisinage du lamier (5).

5. Tablier de coupe (1) selon une des revendications précédentes, **caractérisé en ce que** les points d'appui (15) sont conformés en unités d'appui (22a, 22b) disposées de façon amovible sur deux éléments porteurs (14), de sorte que, dans la position des unités d'appui (22a, 22b) désolidarisée des éléments porteurs (14), la bande de convoyage (13) et les rouleaux (24a, 24b) peuvent être sortis conjointement par le dessous du tablier de coupe (1).

6. Tablier de coupe (1) selon une des revendications précédentes, **caractérisé en ce que**, au moyen d'un dispositif de tension (16) disposé de part et d'autre des points d'appui (15), le rouleau mobile (24a) peut être transféré de la position de fonctionnement vers la position d'entretien et inversement.

7. Tablier de coupe (1) selon la revendication 6, **caractérisé en ce que** le dispositif de tension respectif (16) est conformé en agencement à genouillère, lequel est disposé de façon amovible extérieurement sur l'élément porteur respectif (14) .

8. Tablier de coupe () selon la revendication 7, **caractérisé en ce que** le dispositif de tension respectif (16) comporte une unité coulissante (17) qui peut coulisser dans la direction longitudinale de l'élément porteur (14) et sur laquelle est fixée l'unité d'appui respective (22a) du rouleau (24a) déplaçable au moyen du dispositif de tension (16).

9. Tablier de coupe (1) selon une des revendications précédentes, **caractérisé en ce que** le rouleau (24a) disposé au voisinage du lamier (5) présente un diamètre extérieur inférieur à celui du rouleau (24b) plus distant du lamier (5).

10. Tablier de coupe (1) selon une des revendications précédentes, **caractérisé en ce que** le rouleau (24a) disposé au voisinage du lamier (5) est conformé en rouleau de renvoi, et le rouleau (24b) plus distant du lamier (5) est conformé en rouleau d'entraînement.
